# EUROPÄISCHE PATENTSCHRIFT

(11) **EP 1 493 245 B1**
(45) Veröffentlichungstag und Bekanntmachung des Hinweises auf die Patenterteilung: **03.08.2011**
(21) Anmeldenummer: 03718600.4
(22) Anmeldetag: 21.02.2003
(51) Int. Cl.: H04L 12/56, H04L 12/26

(54) **VERFAHREN ZUR AUSGABE VON ZUSTANDSDATEN**
METHOD FOR THE OUTPUT OF STATUS DATA
PROCEDE DE SORTIE DE DONNEES D'ETAT

(30) Priorität: 12.03.2002 DE 10210707
(43) Veröffentlichungstag der Anmeldung: 05.01.2005
(73) Patentinhaber: Deutsche Telekom AG, 53113 Bonn (DE)
(72) Erfinder: WIDERA, Ralf, 64347 Griesheim (DE); HEIDEMANN, Cornelius, 64283 Darmstadt (DE); MENDE, Joachim, 64347 Griesheim (DE); DÖRKEN, Heinrich, 64293 Darmstadt (DE)
(74) Vertreter: Borchert, Uwe Rudolf
(86) Internationale Anmeldenummer: PCT/DE2003/000539
(87) Internationale Veröffentlichungsnummer: WO 2003/084135

(56) Entgegenhaltungen:
- WO-A1-00/31963
- WO-A1-00/31963
- WO-A1-98/21845
- WO-A1-98/21845

## Beschreibung

Die Erfindung betrifft ein Verfahren zur Ausgabe von Zustandsdaten gemäß der im Oberbegriff des Anspruches 1 angegebenen Art.

Aus der nicht vorveröffentlichten DE 100 46 240.5 und der nicht vorveröffentlichten DE 101 28 927.8 sind Verfahren zur Messung unidirektionaler Übertragungseigenschaften bekannt.

Bei einem Vertrag zwischen einem Netzbetreiber und Kunden können dem Kunden garantierte Eigenschaften im Telekommunikationsnetz angeboten werden, z. B. eine obere Grenze für Paketverzögerung und Laufzeitschwankungen, die insbesondere bei IP-Telefonie und Videokonferenz von Bedeutung ist.

Somit werden Qualitätsmerkmale im Telekommunikationsnetz garantiert, die durch die unidirektionale Paketlaufzeit und den daraus ableitbaren Parametern gebildet werden. Dem Kunden sollen also im Telekommunikationsnetz Maximalwerte für einen oder mehrere dieser Parameter, wie Paketlaufzeiten, Laufzeitschwankungen und Paketverluste, und/oder Minimalwerte für den Durchsatz zugesichert werden. Zudem soll die Einhaltung dieser Werte vom Netzanbieter und dem Kunden überprüfbar sein.

Daher werden zwischen Messrechnern unidirektionale Messverbindungen eingerichtet. Auf diesen Messverbindungen werden Messpakete mit einer konfigurierbaren zeitlichen Verteilung von einem als Sender dienenden Messrechner zu einem als Empfänger dienenden Messrechner gesendet. Die Messpakete enthalten u. a. Zeitmarken und Sequenznummern. Um die Einwegverzögerung messen zu können, müssen die Zeitmarken beim als Sender dienenden Messrechner und beim als Empfänger dienenden Messrechner hinreichend genau zeitlich synchronisiert sein. Eine technische Realisierung ist z. B. die Generierung von Zeitmarken durch die GPS-(Global Positioning System)-Empfänger. Damit können die Zeitmarken mit einem Fehler von ± 1/2 µs erzeugt werden.

Die Messergebnisse werden von einem die Messrechner steuernden Steuerrechner von den Messrechnern abgerufen, in einer Datenbank abgelegt und zur Visualisierung dort bereitgestellt. Für den Kunden und den Diensteanbieter ist es notwendig, einen zeitnahen Überblick über den Status der Messverbindungen und des Messsystems zu bekommen. Zeitnah bedeutet in diesem Zusammenhang, dass eine Änderung im Status der Messverbindungen oder des Messsystems möglichst schnell angezeigt wird. Insbesondere bei mehreren Messrechnern, die auch verschiedenen Steuerrechnern zugeordnet sein können, fallen eine Vielzahl von Informationen - Zustandsdaten - an. Problematisch hierbei ist, dass durch die Vielzahl der Informationen der Überblick über wesentliche Meldungen verloren geht, die möglicherweise Maßnahmen zur Sicherung der Übertragungsqualität notwendig machen.

Aus der WO 98/21845 A1 ist ein gattungsgemäßes Verfahren zur Ausgabe von Zustandsdaten bekannt, die zumindest den jeweiligen Status von Komponenten und Verbindungen in einem Messsystem und Messergebnisse dieses Messsystems in einem Telekommunikationsnetz umfassen. Die Ausgabe erfolgt dabei über einen Monitor. Teilweise werden die Zustandsdaten nach vorbestimmten Bedingungen festgelegten Statusbereichen individuell ausgegeben. Dadurch kann erfasst werden, welchen Zustandsbereichen die Zustandsdaten zugeordnet wurden. Das Messsystem umfasst zwei Messrechner und einen die Messrechner steuernden Steuerrechner. Die Zustandsdaten basieren dabei auf der Qualität der Verbindung.

Ferner ist aus der WO 00/31963 ein Verfahren zur Ausgabe von Zustandsdaten bekannt, mit der Verwendung von mehreren Darstellungsebenen bei der Präsentation der Zustandsdaten. Die Zustandsbereiche sind in eine hierarchische Organisation eingebunden.

Der Erfindung liegt die Aufgabe zugrunde, ein Verfahren zur Ausgabe von Zustandsdaten gemäß der im Oberbegriff des Anspruches 1 angegebenen Art derart weiterzubilden, dass unter Vermeidung der genannten Nachteile auch bei einer Vielzahl von Zustandsdaten ein Überblick über die Gesamtsituation in einem einfachen Verfahren gewährleistet wird.

Diese Aufgabe wird durch die kennzeichnenden Merkmale des Anspruches 1 in Verbindung mit seinen Oberbegriffsmerkmalen gelöst.

Die Unteransprüche bilden vorteilhafte Weiterbildungen der Erfindung.

Der Erfindung liegt die Erkenntnis zugrunde, dass durch Zuordnung von Zustandsdaten zu bestimmten Bereichen nach vorbestimmten Bedingungen sich die Anzahl der Informationen auf einfache Weise reduzieren und gewichten lässt. Der Nutzer erfährt lediglich, welchem Statusbereich und somit welcher Qualitätsstufe Zustandsdaten zugeordnet wurden. Hierdurch kann der Nutzer dann Schlussfolgerungen beispielsweise für zu ergreifende Maßnahmen zur Sicherung der Übertragungsqualität in einem Telekommunikationsnetz ergreifen.

Nach der Erfindung werden daher zumindest teilweise die Zustandsdaten nach vorbestimmten Bedingungen festgelegten Statusbereichen zugeordnet und die entsprechend zugeordneten Statusbereiche individuell ausgegeben, sodass einfach erfasst werden kann, welchem Statusbereich die Zustandsdaten zugeordnet wurden. Das Messsystem weist dabei zumindest zwei Messrechner und einen die Messrechner steuernden Steuerrechner auf. Die Zustandsdaten basieren auf dem Status der Messrechner, der Qualität der Messverbindung zwischen den Messrechnern, der Erreichbarkeit der Messrechner durch den Steuerrechner, der Zeitsynchronisation der Messrechner und der Aktualität der Zustandsdaten. Vorzugsweise können die Statusbereiche durch zumindest einen Schwellwert begrenzt sein, sodass mit Überschreiten dieses Schwellwertes die Zustandsdaten einem anderen Statusbereich zugeordnet werden.

Um die Zustandsdaten für den Nutzer möglichst einfach aufzubereiten, werden diese zusammen mit dem zugeordneten Statusbereich in einer Grafik von der Ausgabevorrichtung dargestellt. Die Grafik kann hierbei als Matrix ausgebildet sein.

Gemäß einer Ausführungsform der Erfindung wird die Grafik in Form einer grafischen Benutzerschnittstelle oder Benutzeroberfläche, beispielsweise mit Hilfe einer Fenstertechnik, ausgeführt, bei der zumindest einzelne Statusbereiche weitere darunter liegende Darstellungsebenen aufweisen, die durch Aktivieren im darüber liegenden Statusbereich sichtbar gemacht werden.

Diese grafischen Benutzerschnittstellen oder -oberflächen (Grafical User Interface, abgekürzt GUI) sind im Computerbereich als Mensch-Maschine-Schnittstelle mittlerweile weit verbreitet. Sie vereinfachen die Arbeit mit einem Computersystem, da durch sie die Eingabe von aufwendigen textuellen Kommandos zum Ausführen von Programmen entfällt. Stattdessen sind intuitive grafische Symbole (Icons) auf einem Bildschirm, also der Ausgabevorrichtung, des Computersystems vorgesehen, die den erwähnten Kommandos entsprechen.

Teil dieser grafischen Benutzerschnittstelle ist auch ein Zeigeelement, das mittels Maus, Trackball, Joystick oder Tastatur auf der grafischen Benutzeroberfläche genutzt wird. Das Zeigeelement, das in der Regel als Zeiger dargestellt ist, wird bei einer grafischen Benutzerschnittstelle zum Auslösen einer Aktivität auf ein Objekt auf dem Desktop positioniert. Ein Objekt kann beispielsweise das Icon eines Programms oder eben ein Element des oben erwähnten Fensters sein. Bereits das Positionieren des Zeigers über dem Objekt kann ein Ereignis darstellen, welches das Computersystem zu einer bestimmten Aktivität veranlasst, beispielsweise das Ausklappen eines Menüs oder die Anzeige einer Information, die einem Benutzer Hilfestellung geben soll.

Diese Art der Informationsanzeige wird auch als Tooltipp bezeichnet. Tooltipps sind insbesondere kleine Hilfefenster, die Schaltflächen der grafischen Benutzerschnittstelle erklären oder weitere Hinweise zu den Zustandsdaten und/oder Statusbereichen geben.

In den weiteren Darstellungsebenen der grafischen Benutzeroberfläche, die als darunter liegende Fenster oder Tooltipps ausgebildet sein können, erfolgt eine zunehmend detailliertere Darstellung der Zustandsdaten und/oder der den Zustandsdaten zugeordneten Statusbereiche.

Um das Erkennen der wesentlichen Informationen zu vereinfachen, werden die einzelnen Statusbereiche durch unterschiedliche farbliche Ausgestaltung individualisiert.

Vorzugsweise bilden zudem die Bereiche miteinander eine Hierarchie, die insbesondere die Größe eines Messergebnisses, mehrere Messergebnisse und/oder die einen Status einer Komponente des Messsystems beschreibenden Werte widerspiegeln.

Hierbei werden bei einer Darstellung in Form einer Matrix in der ersten Spalte der Matrix Zustandsdaten angezeigt, die den Status der einzelnen Messrechner

Die in den Zeilen zwei fortfolgende sowie in den Spalten zwei fortfolgende angeordneten Felder der Matrix zeigen jeweils den Status der Messverbindungen zwischen den einzelnen Messrechnern an, wofür in der ersten Spalte von oben nach unten die Messrechner in einer vorbestimmten Reihenfolge und in der ersten Zeile die Zuordnung der Messrechner in derselben Reihenfolge von links nach rechts in ihrer Zuordnung zu einem Steuerrechner angeordnet sind.

Vorzugsweise zeigt eines dieser Felder der Matrix jeweils eine Messverbindung oder mehrere Messverbindungen eines Messrechners zu einem anderen Messrechner in eine Richtung und das symmetrisch zur Diagonalen der Matrix entsprechende Feld die umgekehrte Richtung der Messverbindung bzw. der Messverbindungen an.

Der Status der jeweiligen Messverbindung wird durch Zuordnung der Messergebnisse im Hinblick auf die Qualität der Messverbindung in Statusbereiche, durch die Zeitsynchronisation der Messrechner und/oder durch die Aktualität der Messergebnisse gebildet.

Die in den Zeilen zwei fortfolgende sowie in den Spalten zwei fortfolgende angeordneten Felder der Matrix weisen jeweils eine zweite Darstellungsebene auf, in welcher der Status der Messverbindung detaillierter dargestellt ist.

Insbesondere zeigt die weitere Darstellungsebene die Art der Messverbindung sowie den Status der einzelnen die Qualität der Messverbindung bestimmenden Messparameter der Messverbindung zwischen den entsprechenden Messrechnern an. Der Status der Messparameter kann hierbei durch die Übertragungseigenschaften in der Messverbindung, wie Paketlaufzeit, Laufzeitschwankungen, Paketverluste o. ä., gebildet sein.

Zudem kann der zweiten Darstellungsebene eine dritte Darstellungsebene untergeordnet sein, in der die Messergebnisse im Detail über einen vorbestimmten Zeitraum angezeigt werden. Den Feldern der ersten Zeile und Spalte der Matrix kann eine zweite Darstellungsebene untergeordnet werden, in der die Systemmeldungen angezeigt werden.

Die Messergebnisse werden von dem Steuerrechner von den Messrechnern abgerufen, in einer Datenbank abgelegt und dort zur Visualisierung bereitgestellt. Die Offline-Anzeige der Messergebnisse und der anderen Zustandsdaten erfolgt mittels eines Browsers. Offline bedeutet in diesem Zusammenhang, dass die Anzeige der

Messergebnisse und der anderen Zustandsdaten manuell initiiert werden muss, während dies bei der Online-Visualisierung automatisch in bestimmten Zeitintervallen geschieht.

Vorzugsweise wird ein Verfahren gemäß der DE 100 46 240.5, der DE 101 28 927.8 und/oder der im Hinblick auf diese Anmeldung am gleichen Tag von der Anmelderin eingereichten Anmeldungen mit dem Titel "Verfahren zur Zeitsynchronisation von zumindest zwei miteinander über ein Telekommunikationsnetz, wie Internet, Intranet oder dergleichen, zusammenwirkenden Messrechnern" und dem Titel "Verfahren zur Übertragung von Messdaten von einem Messrechner zu einem Steuerrechner eines Messsystems" verwendet.

Weitere Vorteile, Merkmale und Anwendungsmöglichkeiten der vorliegenden Erfindung zur Ausgabe von Zustandsdaten ergeben sich aus der nachfolgenden Beschreibung in Verbindung mit den in der Zeichnung dargestellten Ausführungsbeispielen.

Die Erfindung wird im Folgenden anhand der in der Zeichnung dargestellten Ausführungsbeispiele näher beschrieben. In der Beschreibung, in den

Patentansprüchen, der Zusammenfassung und in der Zeichnung werden die in der hinten angeführte Liste der Bezugszeichen verwendeten Begriffe und zugeordneten Bezugszeichen verwendet.

In der Zeichnung bedeutet:
- Fig. 1: eine schematische Darstellung eines Telekommunikationsnetzes mit drei Messrechnern zur Durchführung des Verfahrens nach der Erfindung;
- Fig. 2: eine schematische Darstellung der grafischen Benutzerschnittstelle in einer ersten Darstellungsebene in Form einer Statusmatrix;
- Fig. 3: eine weitere Darstellungsebene der Statusmatrix von Fig. 2; und
- Fig. 4: eine schematische Darstellung einer Grafik von Messergebnissen über eine Messverbindung.

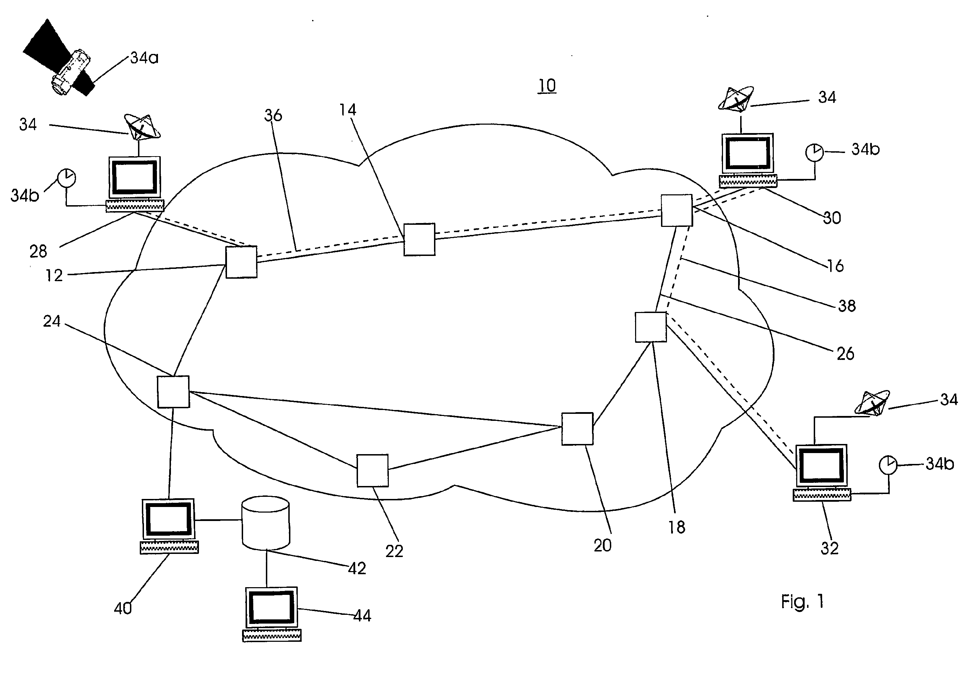

In Fig. 1 ist schematisch ein Telekommunikationsnetz 10 dargestellt, das aus mehreren Vermittlungseinrichtungen 12 bis 24 besteht, die über Verbindungsleitungen 26 miteinander verbunden sind. Die Vermittlungseinrichtung 12 ist einem ersten Messrechner 28 und die Vermittlungsreinrichtung 16 einem zweiten Messrechner 30 und die Vermittlungseinrichtung 18 einem dritten Messrechner 32 zugeordnet. In jedem Messrechner 28, 30, 32 ist ein Messprogramm zur Messung der unidirektionalen Übertragungseigenschaften installiert.

Jeder Messrechner 28, 30, 32 ist mit einer GPS-Antenne (Global Positioning System) verbunden und mit einer (nicht dargestellten) GPS-Karte zur Verarbeitung der über die GPS-Antenne empfangenen Daten versehen. GPS-Antenne und GPS-Karte bilden zusammen die GPS-Einheit 34, die mit mehreren Satelliten 34a zusammenwirkt.

Die Verbindung zwischen dem ersten Messrechner 28, der Vermittlungseinrichtung 12, der Vermittlungseinrichtung 14, der Vermittlungseinrichtung 16 und dem zweiten Messrechner 30 bildet die erste Messstrecke 36, die gestrichelt dargestellt ist. Die Verbindung zwischen dem zweiten Messrechner 30, der Vermittlungseinrichtung 16, der Vermittlungseinrichtung 18 und dem dritten Messrechner 32 bildet die zweite Messstrecke 38, die ebenfalls gestrichelt dargestellt ist.

Der Vermittlungseinrichtung 24 ist ein Steuerrechner 40 zugeordnet. Der Steuerrechner 40 wirkt mit einer Datenbank 42 zusammen, an die eine Ausgabevorrichtung in Form eines Ausgaberechners 44 mit Bildschirm angeschlossen ist.

Bei dem Telekommunikationsnetz 10 handelt es sich beispielsweise um das Internet oder ein Intranet.

Ziel der Messanordnung ist es beispielsweise die Paketlaufzeit von dem ersten Messrechner 28 über die Messstrecke 36 zu dem zweiten Messrechner 30 zu ermitteln. Es handelt sich somit um eine unidirektionale Messverbindung, bei der einzelne Messpakete von dem ersten Messrechner 28 zu dem zweiten Messrechner 30 gesendet werden.

Auf der Messstrecke 36 werden nun von dem ersten Messrechner 28 Messpakete mit einer einstellbaren zeitlichen Verteilung (z.B. konstante oder exponentiale Verteilung) zum zweiten Messrechner 30 gesendet. Die Messpakete werden dabei mit Hilfe des

User-Datagram-Protocols (UDP) verschickt. Dies ist ein verbindungsloses Internet-Transport-Protokoll, das auf IP aufsetzt. Die Messpakete enthalten u. a. Zeitmarken und Sequenznummern.

Um die unidirektionale Laufzeit mit ausreichender Genauigkeit messen zu können, werden die Zeitmarken beispielsweise von der GPS-Einheit 34 generiert. Damit können die Zeitmarken mit einem Fehler von ± 1/2 µs erzeugt werden. Hierbei wird die Zeitmarke von dem ersten Messrechner 28 gesetzt, (möglichst) kurz bevor das erste Bit eines Messpakets gesendet wird.

Das Messpaket wird nun über die Messstrecke 36, also über die Verbindungsleitung 26, die Vermittlungsstelle 12, die Vermittlungsstelle 14 und die Vermittlungsstelle 16 zum zweiten Messrechner 30 gesendet. Wenn das letzte Bit des Messpakets beim zweiten Messrechner 30 empfangen wurde, wird die zweite Zeitmarke erfasst. Die zweite Zeitmarke wird von dem zweiten Messrechner 30 beispielsweise ebenfalls durch eine GPS-Einheit 34 generiert.

Aus den Zeitmarken wird dann unter Berücksichtigung eines rechnerbezogenen Zeitanteils die Paketlaufzeit berechnet und dieser Wert als Messergebnis dem Steuerrechner 40 übermittelt und in der Datenbank 42 abgelegt. Über den Ausgaberechner 44 werden die Ergebnisse fortlaufend online dargestellt. Über die über die Messstrecke 36 gesendeten Messpakete können auch die Laufzeitschwankungen sowie Paketverluste u. ä. ermittelt werden. Diese Daten werden dann entsprechend in der Datenbank 42 abgelegt.

Aufgrund dieser Werte kann die Qualität der Messstrecke 36, also der Verbindung zwischen dem ersten Messrechner 28 und dem zweiten Messrechner 30 bestimmt und überwacht werden. Das gleiche Verfahren kann auch auf der Messstrecke 38 aber auch bei weiteren, hier nicht dargestellten, Messstrecken angewendet werden. Hierdurch werden eine Vielzahl von Daten generiert und in der Datenbank 42 abgelegt.

Die oben angesprochenen Messergebnisse - Zustandsdaten - werden von dem Steuerrechner 40 von den Messrechnern 28, 30 und 32 abgerufen, in der Datenbank 42 abgelegt und dort zur Visualisierung bereitgestellt.

Der Ausgaberechner 44 hat eine grafische Konfigurationsschnittstelle sowie eine grafische Benutzerschnittstelle für den Online- und den Offline-Betrieb, mit deren Hilfe die in der Datenbank 42 abgelegten Zustandsdaten visualisiert werden.

Die grafische Benutzerschnittstelle dient insbesondere zur Ausgabe und Aufbereitung der Zustandsdaten.

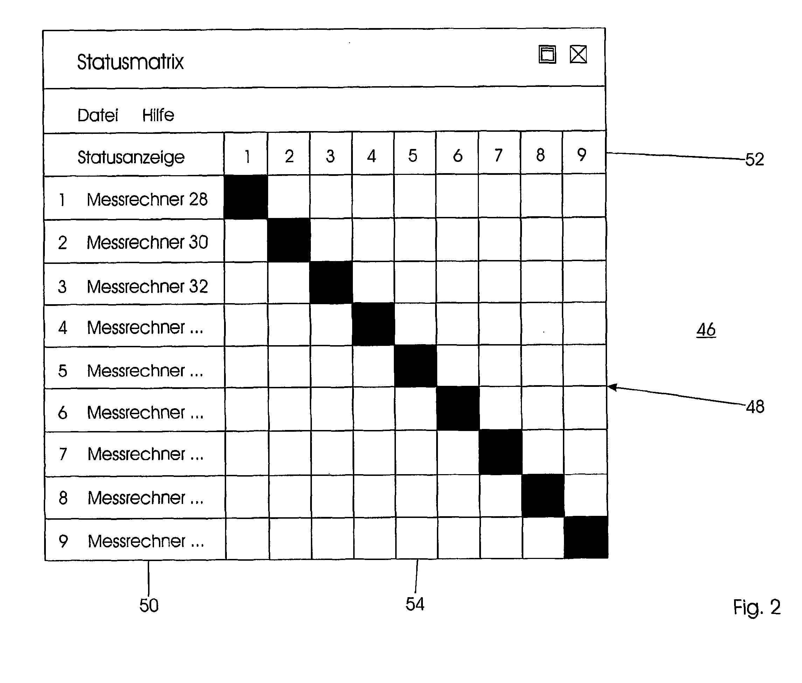

In Fig. 2 ist eine grafische Benutzerschnittstelle 46 zur Darstellung der in der Datenbank 42 abgelegten Zustandsdaten via Ausgaberechner 44 dargestellt.

Die grafische Benutzerschnittstelle 46 weist in ihrer ersten Darstellungsebene eine in Fig. 2 dargestellte Statusmatrix 48 auf. In einer weiteren Darstellungsebene unter der Statusmatrix 48 liegt zum einen eine detailliertere Statusanzeige und zum anderen eine Systemmeldungsanzeige.

Die Zustandsdaten werden nach vorbestimmten Bedingungen festgelegten Statusbereichen zugeordnet. Diese entsprechend zugeordneten Statusbereiche werden farblich gekennzeichnet individuell dargestellt, sodass einfach erfasst werden kann, welchen Statusbereichen die Zustandsdaten zugeordnet wurden und welche Qualitätsanforderungen erfüllt sind.

Beispielsweise wird dem Nutzer durch die Farben Grau, Grün, Gelb und Rot der Zustand der Komponenten des in Fig. 1 dargestellten Messsystems und der Messverbindungen visualisiert. Die verwendeten Farben haben dabei die in der Tabelle 1 dargestellte Bedeutung.

**Tabelle 1**

| Farbe | Bedeutung | Mögliche Ursache |
|---|---|---|
| Grau | nichts zu beachten | |
| Grün | alles OK | |
| Gelb | Warnsituation | Es wurde z.B. ein Schwellwert Level 1 für eine Messverbindung überschritten |
| Rot | Alarmsituation | Es wurde z.B. ein Schwellwert Level 2 für eine Messverbindung überschritten oder eine Systemkomponente ist nicht mehr verfügbar. |

Den Farben kann gegebenenfalls auch eine akustische Ausgabe zugeordnet werden.

Die oberste Ebene der grafischen Benutzerschnittstelle 46 wird durch die in Fig. 2 dargestellte Statusmatrix 48 gebildet. Hier wird der Status der Komponenten des in Fig. 1 dargestellten Messsystems und der Messverbindungen über die Messstrecken 36 und 38 angezeigt. Die Anzeige wird in Abständen von ca. einer Minute aktualisiert. Die Statusmatrix 48 ist in mehrere Teilbereiche gegliedert. In der ersten Spalte 50 sind die untereinander liegenden Felder von oben nach unten durchnummeriert und die Messrechner 28, 30, 32 aufgeführt. Im folgenden wird davon ausgegangen, dass neun Messrechner vorhanden sind. Neben den fortlaufenden Nummern wird entweder ihre IP-Adresse oder ihr Name angezeigt, sodass eine einfache Zuordnung des Feldes in der Spalte 50 zu dem entsprechenden Messrechner 28, 30, 32 durch den Nutzer ermöglicht wird. Durch die Farbe in den Feldern der ersten Spalte 50 wird der aktuelle Status der Messrechner 28, 30, 32 visualisiert. Der Status der Messrechner 28, 30, 32 wird dabei durch drei Dinge beeinflusst:
a) Anzeige des Status der Zeitsynchronisation des Messrechners 28, 30, 32;
b) Anzeige der Erreichbarkeit des Messrechners 28, 30, 32 durch den Steuerrechner 40;
c) Anzeige, ob Systemmeldungen mit Status "Fehler" oder "Warnungen" vorliegen, die durch die Messrechner 28, 30, 32 generiert werden.

In der ersten Spalte 50 wird jeweils die Farbe angezeigt, die den schlechtesten Status repräsentiert.

Hierbei werden folgende Fälle unterschieden:

**Tabelle 2**

| Farbe | Anzeigetext | Bedeutung |
|---|---|---|
| grün | Synchronisiert (GPS, hochgenau) | Der Messrechner wird mittels einer GPS- Einheit synchronisiert (Synchronisationsfehler < 1 µs). |
| | Synchronisiert (NTP, genau) | Der Messrechner hat keine GPS-Einheit. Die Synchronisation erfolgt über NTP (Synchronisationsfehler < 1 ms). |
| gelb | Synchronisiert (NTP, genau) | Der Messrechner ist zwar mit einer GPS- Einheit ausgestattet. Die GPS-Synchronisation ist aber zur Zeit offensichtlich nicht möglich. Mögliche Gründe: Antenne / Antennenzuleitung defekt, Antenne hat keinen Sichtkontakrt zu mindestens 4 Satelliten des GPS). Die Synchronisation erfolgt über NTP (Synchronisationsfehler < 1 ms). Die Umschaltung auf NTP-Synchronisation geschieht automatisch. |
| | Synchronisiert (NTP, ungenau) | Die Synchronisation erfolgt über NTP (Synchronisationsfehler < 2 ms). Keine Aussage, ob eine GPS-Einheit vorhanden ist. |
| rot | nicht synchronisiert | Der Messrechner ist nicht synchronisiert. Der Messrechner hat keine GPS-Einheit und Synchronisation über NTP ist nicht konfiguriert. |
| | nicht synchronisiert (GPS) | Der Messrechner ist nicht synchronisiert. Der Messrechner hat eine GPS-Einheit. Die GPS- Synchronisation ist offensichtlich zur Zeit nicht möglich. Synchronisation über NTP ist nicht konfiguriert. |
| | nicht synchronisiert (NTP) | Der Messrechner ist nicht synchronisiert. Der Messrechner hat keine GPS-Einheit. Die Synchronisation mittels NTP ist konfiguriert aber offensichtlich zur Zeit nicht möglich bzw. zu ungenau (bei NTP-Synchronisation kann es einige Stunden dauern bis der Synchronisationsfehler < 2 ms ist). |
| | nicht synchronisiert (GPS, NTP) | Der Messrechner ist nicht synchronisiert. Der Messrechner hat eine GPS-Einheit. Die GPS- Synchronisation ist offensichtlich zur Zeit nicht möglich. Die Synchronisation mittels NTP ist konfiguriert aber offensichtlich zur Zeit nicht möglich bzw. zu ungenau (bei NTP- Synchronisation kann es einige Stunden dauern bis der Synchronisationsfehler < 2 ms ist). |

Der in der Tabelle 2 in Spalte 2 dargestellte Anzeigetext ist als Tooltipp in dem jeweiligen Feld der ersten Spalte 50 der Statusmatrix 48 hinterlegt und wird somit angezeigt, wenn das Zeigeelement auf ein Feld in der Spalte 50 der Statusmatrix 48 positioniert und dort stehen gelassen wird.

Die Farbwahl entspricht somit Statusbereichen im Hinblick auf die Zeitsynchronisation der Messrechner 28, 30 und 32.

Wie oben erwähnt, kann die Zeitsynchronisation mittels GPS-Einheit 34 erfolgen. Alternativ hierzu ist es aber auch möglich, eine Zeitsynchronisation über das NTP/Network-Time-Protocol vorzunehmen. Dabei wird die lokale Uhr 34b synchronisiert.

Eine Zeitsynchronisation über die GPS-Einheit 34 ist genauer als über NTP. Entsprechend fließt die Art der Zeitsynchronisation als Zustandsdaten für die Zuordnung des Messrechners in einen Statusbereich mit ein.

Als weitere Zustandsdaten für die Zuordnung eines Messrechners in einen Statusbereich fließt die Erreichbarkeit des Messrechners 28, 30, 32 durch den Steuerrechner 40 in die Wertung mit ein.

**Tabelle 3**

| Farbe | Anzeigetext | Bedeutung |
|---|---|---|
| grün | (kein spezifischer Text) | Der letzte Kontakt zwischen Messrechner und Steuerrechner war vor weniger als 5 Minuten. |
| rot | nicht erreichbar | Es besteht seit mindestens 5 Minuten kein Kontakt zum Messrechner. Mögliche Gründe: Die Verbindung zum Messrechner wurde unterbrochen oder der Messrechner ist nicht gestartet bzw. läuft nicht mehr. |

Auch der Text in Spalte 2 in der Tabelle 3 wird als Tooltipp hinterlegt und es erscheint ein entsprechender Anzeigetext, wenn das Zeigeelement in der ersten Spalte 50 der Statusmatrix 48 positioniert und dort stehen gelassen wird.

Des Weiteren fließen als Zustandsdaten für die Zuordnung des Status der Messrechner 28, 30, 32 in vorbestimmte Statusbereiche, die entsprechend farblich markiert sind, auch Systemmeldungen der Messrechner 28, 30, 32 mit ein.

**Tabelle 4**

| Farbe | Anzeigetext | Bedeutung |
|---|---|---|
| grün | (kein spezifischer Text) | Es sind keine unbestätigten Fehler oderWarnungen vorhanden. |
| gelb | (kein spezifischer Text) | Es ist mindestens eine unbestätigte Warnung vorhanden (aber kein Fehler). |
| rot | (kein spezifischer Text) | Es ist mindestens ein unbestätigter Fehler vorhanden. |

In der ersten Zeile 52 der Statusmatrix 48 sind die Felder den Messrechnern 28, 30, 32 zugeordnet, wobei die Reihenfolge von links nach rechts der Reihenfolge in der ersten Spalte 50 von oben nach unten im Hinblick auf die Messrechner 28, 30, 32 entspricht. In den Feldern der ersten Zeile 52 wird die Zuordnung des jeweiligen Messrechners 28, 30, 32 zu dem Steuerrechner 40 angezeigt, wovon im Telekommunikationsnetz 10 auch mehrere Steuerrechner 40 vorhanden sein können.

Auch diese Zuordnung wird einem farblich gekennzeichneten Statusbereich zugeordnet. Dieser wird durch folgende Zustandsdaten beeinflusst:
a) Zuordnung des jeweiligen Messrechners 28, 30, 32 zu einem betriebsbereiten Steuerrechner 40;
b) Anzeige der Erreichbarkeit der Messrechner 28, 30, 32 durch den Steuerrechner 40;
c) Anzeige, ob Systemmeldungen mit Status "Fehler" oder "Warnungen" vorliegen die vom Steuerrechner 40 generiert wurden.

In der ersten Zeile 52 wird jeweils die Farbe angezeigt, die den schlechtesten Status repräsentiert.

Bei der Zuordnung der Messrechner 28, 30, 32 zu einem Steuerrechner 40 werden folgende Zustandsdaten den jeweiligen farblich gekennzeichneten Statusbereichen zugrundegelegt.

**Tabelle 5**

| Farbe | Anzeigetext | Bedeutung |
|---|---|---|
| rot | ungültig bzw. nicht definiert | Dieser Messrechner wurde keinem Steuerrechner zugeordnet. |
| grün | (kein spezifischer Text) | Dieser Messrechner ist einem gültigen Steuerrechner zugeordnet. |

) In Spalte 2 der Tabelle 5 wird der Text als Tooltipp hinterlegt und es erscheint ein entsprechender Anzeigetext, wenn das Zeigeelement in dem Feld der ersten Zeile 52 der Statusmatrix 48 positioniert und dort stehen gelassen wird.

Bei der Erreichbarkeit der Messrechner 28, 30 und 32 durch den Steuerrechner 40 werden folgende Zustandsdaten den jeweiligen farblich gekennzeichneten Statusbereichen zugrundegelegt.

**Tabelle 6**

| Farbe | Anzeigetext | Bedeutung |
|---|---|---|
| rot | nicht erreichbar | Die letzte Aktualisierung des Status war vor mindestens 5 Minuten. |
| grün | erreichbar | Der Steuerrechner hat vor weniger als 5 Minuten den Status aktualisiert. |

Der Text in der zweiten Spalte der Tabelle 6 wird als Tooltipp hinterlegt und es erscheint ein entsprechender Anzeigetext, wenn das Zeigeelement in dem Feld der ersten Zeile 52 der Statusmatrix 48 positioniert und dort stehen gelassen wird.

Bei den Systemmeldungen der Messrechner 28, 30, 32 und des Steuerrechners 40 werden folgende Zustandsdaten den jeweiligen farblich gekennzeichneten Statusbereichen zugrundegelegt:

**Tabelle 7**

| Farbe | Anzeigetext | Bedeutung |
|---|---|---|
| grün | (kein spezifischer Text) | Es sind keine unbestätigten Fehler oder Warnungen vorhanden. |
| gelb | (kein spezifischer Text) | Es ist mindestens eine unbestätigte Warnung vorhanden (aber kein Fehler). |
| rot | (kein spezifischer Text) | Es ist mindestens ein unbestätigter Fehler vorhanden. |

Der verbleibende Bereich der Statusmatrix 48, also die Zeilen 2 bis 10 sowie die Spalten 2 bis 10 bilden den dritten Bereich 54 der Statusmatrix 48. In diesem Bereich 54 wird der Status der Messverbindungen zwischen den Messrechnern 28, 30, 32 angezeigt. Der Status der Messverbindungen wird durch folgende Zustandsdaten beeinflusst:
a) ob sogenannte Schwellwerte definiert sind;
b) ob diese aktuell eingehalten werden;
c) ob im letzten Zeitintervall, das der Überwachung der Schwellwerte zugrunde liegt, Messpakete empfangen wurden;
d) ob beide miteinander kommunizierenden Messrechner 28, 30, 32 hinreichend zeitsynchronisiert sind.
e) ob beide miteinander kommunizierenden Messrechner 28, 30, 32 durch den Steuerrechner 40 erreichbar sind.

Jedes Feld dieses dritten Bereiches identifiziert die jeweilige(n) Messverbindung(en) von einem Messrechner 28, 30, 32 zu dem anderen Messrechner 28, 30, 32 in eine Richtung, also unidirektional. Die Gegenrichtung ist im jeweils symmetrisch zur Diagonalen - schwarz dargestellt - Feld des dritten Bereichs 54 dargestellt.

In dem dritten Bereich 54 wird jeweils die Farbe angezeigt, die den schlechtesten Status repräsentiert. Bei der Definition von Schwellwerten werden folgende Zustandsdaten den jeweiligen farblich gekennzeichneten Statusbereichen zugrundegelegt, wobei prinzipiell bei den Schwellwerten verschiedene Level denkbar sind. Im folgenden werden nur zwei Level eingegeben, nämlich ein Vorwarnwert - Level 1 - und ein Alarmwert - Level 2 -. Die Schwellwerte können für jede Verkehrsklasse und jeden Messparameter, wie Laufzeitverzögerung, Laufzeitschwankungen und Paketverlust, unabhängig voneinander definiert sein.

**Tabelle 8**

| Farbe | Bedeutung |
|---|---|
| grau | Für keine der Messverbindungen zwischen diesen Messrechnern wurde ein Schwellwert definiert. |
| wie Tabellen 9 und 10 | Für mindestens eine der Messverbindungen wurde mindestens bei einem Messparameter mindestens ein Schwellwert definiert. |

Bei der Überwachung der Schwellwerte werden folgende Zustandsdaten in jeweiligen farblich gekennzeichneten Statusbereichen zugrundegelegt:

**Tabelle 9**

| Farbe | Bedeutung |
|---|---|
| grün | Für keine der Messverbindüngen zwischen diesen Messrechnern wurde ein Schwellwert überschritten. |
| gelb | Für mindestens eine der Messverbindungen zwischen diesen Messrechnern wurde mindestens ein Schwellwert Level 1 überschritten aber kein Schwellwert Level 2. |
| rot | Für mindestens eine der Messverbindungen zwischen diesen Messrechnern wurde min- destens ein Schwellwert Level 2 überschritten. |

Bei dem Empfang von Messpaketen im Zeitintervall werden folgende Zustandsdaten den jeweiligen farblich gekennzeichneten Statusbereichen zugrundegelegt:

**Tabelle 10**

| Farbe | Bedeutung |
|---|---|
| grün | Im letzten Zeitintervall wurde für alle Messverbindungen zwischen den beiden Messrechnern mindestens ein Messpaket empfangen. |
| rot | Im letzten Zeitintervall wurde für mindestens eine der Messverbindungen zwischen den beiden Messrechnern kein Messpaket empfangen. |

Bei der Zeitsynchronisation der Messrechner werden folgende Zustandsdaten den jeweiligen farblich gekennzeichneten Statusbereichen zugrundegelegt:

**Tabelle 11**

| Farbe | Bedeutung |
|---|---|
| grün | Beide Messrechner waren hinreichend genau synchronisiert. |
| rot | Mindestens einer der beiden Messrechner hatte keine ausreichende Zeitsynchronisation, so dass die Zeitmesswerte ungültig sind. Nur der Paketverlust wird korrekt gemessen, da er von der Zeitsynchronisation nicht beeinflusst wird. |

Jedem Feld des dritten Bereichs 54 ist eine weitere Darstellungsebene untergelegt, in der man zu einer detaillierteren Statusanzeige kommt. Die Statusanzeige zeigt den Status der einzelnen Messverbindungen zwischen zwei Messrechnern 28, 30 an, wobei entsprechend der Übertragungsrichtung unterschieden wird. Die detaillierte Statusanzeige kann aktiviert werden, indem man
1. das Zeigeelement auf ein Feld im dritten Bereich 54 der Statusmatrix 58 positioniert und dort stehen lässt - die detaillierte Statusmatrix ist somit in Tooltipp-Technik hinterlegt - oder
2. das Zeigeelement auf ein Feld des dritten Bereichs 54 der Statusmatrix 48 positioniert und mit der linken Taste einer Maus anklickt.

Im ersten Fall bleibt die Anzeige nur für einige Sekunden sichtbar und im zweiten Fall dauerhaft, bis die Anzeige aktiv durch Anklicken des Kästchens mit dem "X" oben rechts geschlossen wird.

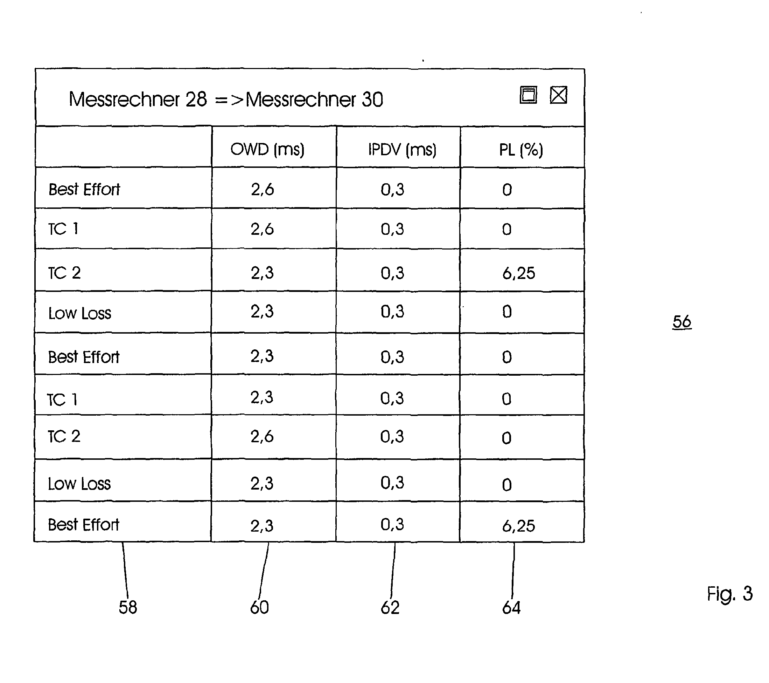

Die detaillierte Statusanzeige 56 ist in Fig. 3 dargestellt und weist vier Spalten auf. In der ersten Spalte 58 der detaillierten Statusanzeige 56 wird die Art der Messverbindung visualisiert:
"Normalverbindung": dunkelgrau
"Expertenverbindung": hellgrau

Expertenverbindungen sind Spezialverbindungen, die nur in begrenztem Umfang, z. B. zur Lokalisierung von Fehlern im Netz, eingesetzt werden. Sie können in einem speziellen Eingabemodus bei der Konfiguration des Messsystems eingerichtet werden und erlauben einen größeren Wertebereich für einige Konfigurationsparameter, wie z. B. kürzere Paketabstände.

In der zweiten, dritten und vierten Spalte 60, 62 und 64 der detaillierten Statusanzeige 56, wird der Status für die einzelnen Messparameter jeder Messverbindung zwischen zwei Messrechnern angezeigt. Es gibt für jede Messverbindung jeweils drei Einträge:
a) One-Way Delay in ms: OWD - zweite Spalte 60;
b) IP-Delay-Variation in Absolutwerten in ms: IPDV - dritte Spalte 62;
c) Packet-Loss in %: PL - vierte Spalte 64.

Der Status der einzelnen Messparameter wird durch drei Dinge beeinflusst:
a) Definition von Schwellwerten und Überwachung der Schwellwerte;
b) Empfang von Messpaketen in einem vorgegebenen Zeitintervall;
c) Zeitsynchronisation der beiden Messrechner 28, 30, 32.

Es wird jeweils die Farbe angezeigt, die den schlechtesten Status repräsentiert.

Bei der Definition von Schwellwerten und der Überwachung der Schwellwerte werden folgende Zustandsdaten den jeweiligen farblich gekennzeichneten Statusbereichen zugrundegelegt:

**Tabelle 12**

| Farbe | Bedeutung |
|---|---|
| grau | Für diesen Messparameter wurden keine Schwellwerte in der Datenbank eingetragen. |
| | Es ist eine "Experten"-Verbindung, bei der die Messergebnisse für jedes Messpaket in der Datenbank abgelegt wird ("so genannter Rohdatenmodus"). Für diese Art Messverbindungen gibt es aufgrund des u. U. sehr großen Datenvolumens keine Schwellwertüberwachung. |
| grün | Für diesen Parameter wurde kein Schwellwert überschritten. |
| gelb | Für diesen Parameter wurde der Schwellwert Level 1 überschritten. |
| rot | Für diesen Parameter wurde der Schwellwert Level 2 überschritten. |

Bei dem Empfang von Messpaketen in einem vorgegebenen Zeitintervall werden folgende Zustandsdaten den jeweiligen farblich gekennzeichneten Statusbereichen zugrundegelegt.

**Tabelle 13**

| Farbe | Bedeutung |
|---|---|
| grün | Im letzten Zeitintervall wurde für diese Messverbindung mindestens ein Messpaket empfangen. |
| rot | Im letzten Zeitintervall wurde für diese Messverbindung kein Messpaket empfangen. Für die einzelnen Messparameter wird in diesem Fall jeweils der Wert 0 angezeigt. |

Bei der Zeitsynchronisation der beiden Messrechner 28, 30, 32 werden folgende Zustandsdaten den jeweiligen farblich gekennzeichneten Statusbereichen zugrundegelegt:

**Tabelle 14**

| Farbe | Bedeutung |
|---|---|
| grün | Beide Messrechner waren hinreichend genau synchronisiert. |
| rot | Mindestens einer der beiden Messrechner hatte keine ausreichende Zeitsynchronisation, so dass die Zeitmesswerte ungültig sind. In diesem Fall wird für OWD und IPDV jeweils "-" und für PL der korrekte Wert (wird von der Zeitsynchronisation nicht beeinflusst) angezeigt. |

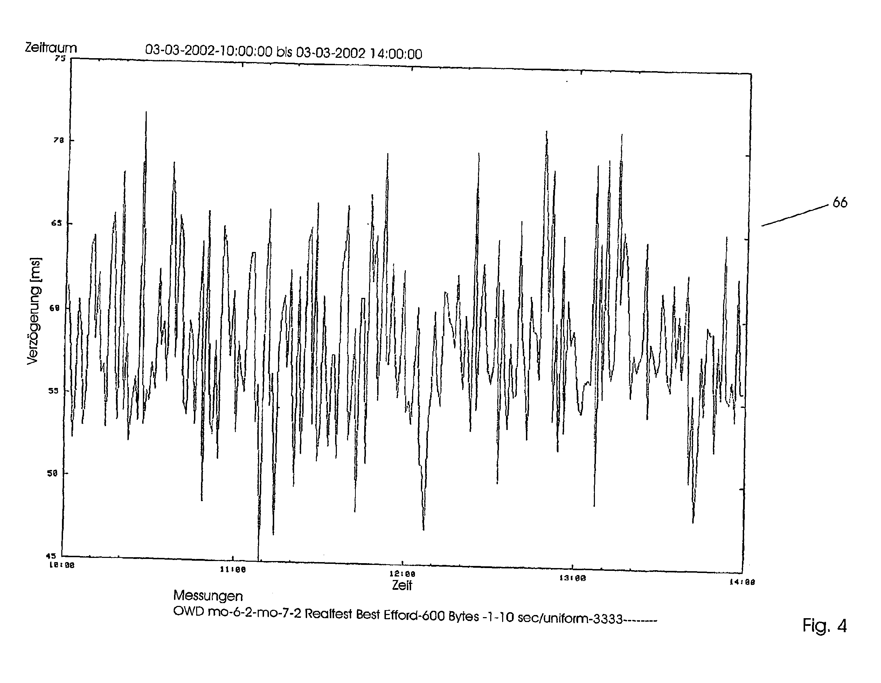

Den zweiten, dritten und vierten Spalten 60, 62 und 64 der detaillierten Statusanzeige 56 ist eine weitere Darstellungsebene unterlegt. Wird das Zeigeelement in einem der Felder in der zweiten, dritten und vierten Spalte 60, 62 und 64 der detaillierten Statusanzeige 56 positioniert und in diesem Feld mit der linken Taste einer Maus ein Messwert in einem Feld angeklickt, so werden für die ausgewählte Messverbindung die Messergebnisse in einem neuen Fenster grafisch dargestellt. Sobald ein neues Messergebnis für diese Messverbindung in der Datenbank abgelegt wird, wird diese Grafik 66 aktualisiert. Ein Beispiel einer solchen Grafik 66 ist in Fig. 4 dargestellt.

Die Felder in der ersten Spalte 50 der Statusmatrix 48 sowie die Felder in der ersten Zeile 52 sind ebenfalls mit einer weiteren Darstellungsebene unterlegt. Diese weitere Darstellungsebene zeigt die Systemmeldungen an. Die Anzeige der Systemmeldungen wird aktiviert, wenn das Zeigeelement auf das Feld eines Messrechners in der ersten Spalte 50 der Statusmatrix 48 oder in ein Feld der ersten Zeile 52 der Statusmatrix 48 positioniert und mit der linken Maustaste angeklickt wird. Die Systemmeldungen werden in einer Liste angezeigt. Fehler werden rot dargestellt, während Warnungen gelb eingefärbt werden. Sobald eine Fehlermeldung oder eine Warnung vorhanden ist, wird auch das Feld in der Statusmatrix entsprechend eingefärbt. Durch ein Anklicken einer Meldung in der Systemmeldungsanzeige wird durch den Nutzer quittiert, das die Meldung wahrgenommen wurde; die Meldung wird hierdurch grau eingefärbt. Erst wenn alle Meldungen in der Anzeige quittiert wurden, wird die Anzeige in der Statusmatrix 48 wieder grün eingefärbt, natürlich nur, wenn der Status des Messrechners dies zulässt, siehe Tabelle 2.

### BEZUGSZEICHENLISTE

- 10: Telekommunikationsnetz
- 12: Vermittlungseinrichtung
- 14: Vermittlungseinrichtung
- 16: Vermittlungseinrichtung
- 18: Vermittlungseinrichtung
- 20: Vermittlungseinrichtung
- 22: Vermittlungseinrichtung
- 24: Vermittlungseinrichtung
- 26: Verbindungsleitung
- 28: erster Messrechner
- 30: zweiter Messrechner
- 32: dritter Messrechner
- 34: GPS-Einheit
- 34a: Satellit
- 34b: lokale Uhr (z.B. über -NTP synchronisiert)
- 36: erste Messstrecke
- 38: zweite Messstrecke
- 40: Steuerrechner
- 42: Datenbank
- 44: Ausgabevorrichtung / Ausgaberechner
- 46: grafische Benutzerschnittstelle
- 48: Statusmatrix
- 50: erste Spalte
- 52: erste Zeile
- 54: dritter Bereich
- 56: detaillierte Statusanzeige des dritten Bereichs
- 58: erste Spalte
- 60: zweite Spalte
- 62: dritte Spalte
- 64: vierte Spalte
- 66: Grafik der Messwerte

## Patentansprüche

1. Verfahren zur Ausgabe von Zustandsdaten, die zumindest den jeweiligen Status von Komponenten und Verbindungen in einem Messsystem und Messergebnisse dieses Messsystems in einem Telekommunikationsnetz (10), wie Internet, Intranet oder ähnliches, umfassen, über eine Ausgabevorrichtung (44), wobei zumindest teilweise die Zustandsdaten nach vorbestimmten Bedingungen festgelegten Statusbereichen zugeordnet und die entsprechend zugeordneten Statusbereiche individuell ausgegeben werden, sodass einfach erfasst werden kann, welchen Statusbereichen die Zustandsdaten zugeordnet wurden, das Messsystem zumindest zwei Messrechner (28, 30, 32) und einen die Messrechner (28, 30, 32) steuernden Steuerrechner (40) umfasst und die Zustandsdaten der Qualität der Messverbindung zwischen den Messrechnern (28, 30, 32) basieren, **dadurch gekennzeichnet, dass** die Zustandsdaten weiterhin auf dem Status von Messrechnern (28, 30, 32), der Erreichbarkeit der Messrechner (28, 30, 32) durch einen Steuerrechner (40), der Zeitsynchronisation der Messrechner (28, 30, 32) und der Aktualität der Zustandsdaten basieren.

2. Verfahren nach Anspruch 1, **dadurch gekennzeichnet, dass** die Statusbereiche durch zumindest einen Schwellwert begrenzt sind.

3. Verfahren nach Anspruch 1 oder 2, **dadurch gekennzeichnet, dass** die Zustandsdaten und die zugeordneten Statusbereiche in einer Grafik (48, 56, 66) von der Ausgabevorrichtung (44) dargestellt werden.

4. Verfahren nach Anspruch 3, **dadurch gekennzeichnet, dass** die Grafik (48) in Form einer Matrix von der Ausgabevorrichtung (44) dargestellt wird.

5. Verfahren nach Anspruch 3 oder 4, **dadurch gekennzeichnet, dass** die Grafik (48) in Form einer grafischen Benutzerschnittstelle oder Benutzeroberfläche, beispielsweise eines Fensters, ausgeführt wird, bei der zumindest einzelne Statusbereiche weitere darunter liegende Darstellungsebenen aufweisen, die durch Aktivieren im darüber liegenden Statusbereich sichtbar gemacht werden.

6. Verfahren nach Anspruch 5, **dadurch gekennzeichnet, dass** in den weiteren Darstellungsebenen eine zunehmend detaillierte Darstellung der Zustandsdaten und/oder der den Zustandsdaten zugeordneten Statusbereiche erfolgt.

7. Verfahren nach einem der vorangehenden Ansprüche, **dadurch gekennzeichnet, dass** die einzelnen Statusbereiche durch unterschiedlich farbliche Ausgestaltung individualisiert werden.

8. Verfahren nach einem der vorangehenden Ansprüche, **dadurch gekennzeichnet, dass** die Bereiche miteinander eine Hierarchie bilden, die insbesondere die Größe eines Messergebnisses, mehrere Messergebnisse und/oder die einen Status einer Komponente des Messsystems beschreibenden Werte widerspiegeln.

9. Verfahren nach Anspruch 4 sowie insbesondere einem weiteren der Ansprüche 5 bis 8, **dadurch gekennzeichnet, dass** in einer ersten Spalte (50) einer Statusmatrix (48) Zustandsdaten angezeigt werden, die den Status der einzelnen Messrechner (28, 30, 32) betreffen, wobei jedes Feld der ersten Spalte (50) der Statusmatrix (48) einem Messrechner (28, 30, 32) zugeordnet ist.

10. Verfahren nach Anspruch 8 oder 9, **dadurch gekennzeichnet, dass** jeder Messrechner (28, 30, 32) in seinem Feld in der ersten Spalte (50) durch seine Kennung - Name, IP-Adresse oder ähnliches - dargestellt wird.

11. Verfahren nach Anspruche 9 oder 10, **dadurch gekennzeichnet, dass** die auf dem Status des jeweiligen Messrechners (28, 30, 32) basierenden Zustandsdaten eines Feldes der ersten Spalte (50) der Statusmatrix (48) durch den Status der Zeitsynchronisation des Messrechners (28, 30, 32), durch die Erreichbarkeit des Messrechners (28, 30, 32) durch den Steuerungsrechner (40) und durch Fehlermeldungen des Messsystems im Hinblick auf diesen Messrechner (28, 30, 32) gebildet werden.

12. Verfahren nach einem der Ansprüche 9 bis 11, **dadurch gekennzeichnet, dass** in der ersten Zeile (52) der Statusmatrix (48) jeweils die einzelnen Zuordnungen eines Messrechners (28, 30, 32) zu einem Steuerrechner (40) dargestellt werden, wobei jedes Feld der ersten Zeile (50) der Statusmatrix (48) eine Zuordnung zu einem Messrechner (28, 30, 32) betrifft.

13. Verfahren nach einem der Ansprüche 9 bis 12, **dadurch gekennzeichnet, dass** die in den Zeilen zwei fortfolgende sowie in den Spalten zwei fortfolgende angeordneten Felder der Statusmatrix (48) jeweils den Status der Messverbindungen zwischen den einzelnen Messrechnern (28, 30, 32) anzeigen, wofür in der ersten Spalte (50) von oben nach unten die Messrechner (28, 30, 32) in einer vorbestimmten Reihenfolge und in der ersten Zeile (50) die Zuordnung der Messrechner (28, 30, 32) in der selben Reihenfolge von links nach rechts in ihrer Zuordnung zu einem Steuerrechner (40) angeordnet sind.

14. Verfahren nach Anspruch 13, **dadurch gekennzeichnet, dass** eines dieser Felder der Statusmatrix (48) jeweils eine Messverbindung, oder mehrere Messverbindungen, eines Messrechners (28, 30, 32) zu einem anderen Messrechner (28, 30, 32) in eine Richtung und das symmetrisch zur Diagonalen der Statusmatrix (48) entsprechende Feld die umgekehrte Richtung der Messverbindung bzw. der Messverbindungen anzeigt.

15. Verfahren nach Anspruch 14, **dadurch gekennzeichnet, dass** der Status der Messverbindung durch Zuordnung der Messergebnisse im Hinblick auf die Qualität einer Messverbindung in Statusbereiche, durch die Zeitsynchronisation der Messrechner (28, 30, 32) und/oder durch die Aktualität der Messergebnisse gebildet wird.

16. Verfahren nach Anspruch 6 und 13 sowie insbesondere einem weiteren der Ansprüche 14 oder 15, **dadurch gekennzeichnet, dass** die in den Zeilen zwei fortfolgende sowie in den Spalten zwei fortfolgende angeordneten Felder der Statusmatrix (48) jeweils eine zweite Darstellungsebene aufweisen, in welcher der Status der Messverbindung detaillierter dargestellt ist.

17. Verfahren nach Anspruch 16, **dadurch gekennzeichnet, dass** die weitere Darstellungsebene die Art der Messverbindung sowie den Status der einzelnen die Qualität der Messverbindung bestimmenden Messparameter der Messverbindung zwischen den entsprechenden Messrechnern (28, 30, 32) anzeigt.

18. Verfahren nach Anspruch 17, **dadurch gekennzeichnet, dass** der Status der Messparameter durch die Übertragungseigenschaften in der Messverbindung, wie Paketlaufzeit, Laufzeitschwankungen, Paketverluste oder ähnliches, gebildet wird.

19. Verfahren nach einem der Ansprüche 15 bis 18, **dadurch gekennzeichnet, dass** der zweiten Darstellungsebene eine dritte Darstellungsebene untergeordnet wird, in der die Messergebnisse im Detail über einen vorbestimmten Zeitraum angezeigt werden.

20. Verfahren nach einem der Ansprüche 9 bis 19, **dadurch gekennzeichnet, dass** den Feldern der ersten Zeile (52) und/oder ersten Spalte der Statusmatrix (48) eine zweite Darstellungsebene untergeordnet wird, in der Systemmeldungen angezeigt werden.

21. Verfahren nach einem der vorangehenden Ansprüche, **dadurch gekennzeichnet, dass** die Zustandsdaten über einen Browser von der Ausgabevorrichtung (44) angezeigt und aktualisiert werden.

22. Verfahren nach einem der vorangehenden Ansprüche, **dadurch gekennzeichnet, dass** die Zustandsdaten in vorbestimmten Zeitintervallen in der Statusmatrix (48) automatisch aktualisiert werden.

## Claims

1. A method for outputting status data comprising at least the respective status of components and connections in a measuring system and measuring results of said measuring system in a telecommunications network (10) such as the Internet, an intranet or the like, via an output device (44), in which at least part of said status data will be allocated to status areas determined on the basis of predetermined conditions and the respectively allocated status areas will be output individually so as to allow a simple detection of which status areas the status data was allocated to, said measuring system having at least two measuring computers (28, 30, 32) and a control computer (40) controlling said measuring computers (28, 30, 32) and said status data being based on the quality of the measuring connection between said measuring computers (28, 30, 32) **characterized in that** said status data is furthermore based on the status of measuring computers (28, 30, 32), on the availability of the measuring computers (28, 30, 32) to a control computer (40), on the time synchronisation of the measuring computers (28, 30, 32) and on how current the status data is.

2. The method of claim 1 **characterized in that** the status areas are limited by at least one threshold value.

3. The method of one of claims 1 or 2 **characterized in that** the output device (44) will display said status data and said allocated status areas in graphics (48, 56, 66).

4. The method of claim 3 **characterized in that** said output device (44) will display said graphics (48) in the form of a matrix.

5. The method of one of claims 3 or 4 **characterized in that** said graphics (48) will be implemented in the form of a graphic user interface or a user interface such as a window in which at least some status areas have additional display levels underneath them which are made visible by activating them in the status area above them.

6. The method of claim 5 **characterized in that** the additional display levels will respectively display more detailed versions of the status data and/or the status areas allocated to said status data.

7. The method of one of the preceding claims **characterized in that** the individual status areas will be individualized by being rendered in different colours.

8. The method of one of the preceding claims **characterized in that** the areas together form a hierarchy which in particular reflects the magnitude of one or several measuring result(s) and/or the values indicating a status of a component of the measuring system.

9. The method of claim 4 as well as in particular one additional one of claims 5 to 8 **characterized in that** a first column (50) of a status matrix (48) will display status data relating to the status of the individual measuring computers (28, 30, 32), with each field of said first column (50) of said status matrix (48) being allocated to one measuring computer (28, 30, 32).

10. The method of one of claims 8 or 9 **characterized in that** in its field in the first column (50), each measuring computer (28, 30, 32) will be represented by its identification - name, IP address or the like.

11. The method of one of claims 9 or 10 **characterized in that** the status data of a field in the first column (50) of said status matrix (48), which data is based on the status of the respective measuring computer (28, 30, 32), will be generated based on the status of the time synchronisation of said measuring computer (28, 30, 32), on the availability of said measuring computer (28, 30, 32) to the control computer (40) and on error messages of said measuring system with regard to said measuring computer (28, 30, 32).

12. The method of one of claims 9 to 11 **characterized in that** shown in each first line (52) of said status matrix (48) will be the individual allocations of a measuring computer (28, 30, 32) to a control computer (40), with each field of said first line (52) of said status matrix (48) relating to an allocation to a measuring computer (28, 30, 32).

13. The method of one of claims 9 to 12 **characterized in that** the status matrix (48) fields contained in line 2 and following as well as in column 2 and following will each indicate the status of the measuring connections between the individual measuring computers (28, 30, 32), for which purpose the first column (50) will show the measuring computers (28, 30, 32) arranged in a predetermined order from top to bottom and the first line (52) will show the allocation of the measuring computers (28, 30, 32) in the same order from left to right as allocated to a control computer (40).

14. The method of claim 13 **characterized in that** one of these fields of said status matrix (48) each will indicate one or plural measuring connection(s) of a measuring computer (28, 30, 32) to another measuring computer (28, 30, 32) in one direction, and the corresponding field that is symmetrical to the diagonal of said status matrix (48) will indicate the one or plural measuring connection(s) in the opposite direction.

15. The method of claim 14 **characterized in that** the status of the measuring connection is formed by the allocation of the measuring results to status areas based on the quality of a measuring connection, by the time synchronisation of the measuring computers (28, 30, 32) and/or by how current the measuring results are.

16. The method of claims 6 and 13 as well as in particular one additional one of claims 14 or 15 **characterized in that** the status matrix (48) fields contained in line 2 and following as well as in column 2 and following each have a second display level in which the status of the measuring connection will be shown in more detail.

17. The method of claim 16 **characterized in that** said additional display level shows the type of measuring connection as well as the status of the individual measuring parameters of the measuring connection between the respective measuring computers (28, 30 32) which parameters determine the quality of the measuring connection.

18. The method of claim 17 **characterized in that** the status of said measuring parameters is formed by the transmission characteristics in the measuring connection such as the packet propagation time, propagation time fluctuations, packet losses or the like.

19. The method of one of claims 15 to 18 **characterized in that** arranged underneath said second display level is a third display level in which the measuring results will be shown in detail over a predetermined time period.

20. The method of one of claims 9 to 19 **characterized in that** arranged underneath the fields of the first line (52) and/or the first column of said status matrix (48) is a second display level in which system messages will be displayed.

21. The method of one of the preceding claims **characterized in that** the status data will be displayed and updated by the output device (44) via a browser.

22. The method of one of the preceding claims **characterized in that** the status data will be updated automatically in the status matrix (48) in predetermined time intervals.

## Revendications

1. Procédé de sortie de données d'état qui comprennent au moins l'état correspondant de composants et liaisons dans un système de mesure et des résultats de mesure de ce système de mesure dans un réseau de télécommunication (10) comme internet, intranet ou similaire, par le biais d'un dispositif de sortie (44) sachant que les données d'état sont affectées au moins en partie selon des conditions prédéfinies à des zones de statut déterminées et les zones de statut affectées conformément à cela sont sorties de manière individuelle, de manière à pouvoir enregistrer facilement à quelles zones de statut les données d'état ont été affectées, le système de mesure comprend au moins deux ordinateurs de mesure (28, 30, 32) et un ordinateur de commande (40) contrôlant les ordinateurs de mesure (28, 30, 32) et les données d'état se fondent sur la qualité de la liaison de mesure entre les ordinateurs de mesure (28, 30, 32), **caractérisé en ce que** les données d'état reposent en outre sur le statut des ordinateurs de mesure (28, 30, 32), l'accessibilité des ordinateurs de mesure (28, 30, 32) à travers un ordinateur de commande (40), la synchronisation temporelle des ordinateurs de mesure (28, 30, 32) et l'actualité des données d'état.

2. Procédé selon revendication 1, **caractérisé en ce que** les zones de statut sont limitées au moins par une valeur seuil.

3. Procédé selon revendication 1 ou 2, **caractérisé en ce que** les données d'état et les zones de statut affectées sont représentées par le dispositif de sortie (44) dans un graphique (48, 56, 66).

4. Procédé selon revendication 3, **caractérisé en ce que** le graphique (48) est représenté par le dispositif de sortie (44) sous forme d'un tableau.

5. Procédé selon revendication 3 ou 4, **caractérisé en ce que** le graphique (48) est réalisé sous la forme d'une interface ou surface utilisateur graphique par exemple d'une fenêtre, dans laquelle au moins des zones de statut individuelles présentent d'autres niveaux de représentation se trouvant en dessous, qui sont rendus visibles par l'activation dans la zone de statut se trouvant au-dessus.

6. Procédé selon revendication 5, **caractérisé en ce que** dans les autres niveaux de représentation s'effectue une représentation détaillée croissante des données d'état et / ou des zones de statut affectées aux données d'état

7. Procédé selon l'une des revendications précédentes, **caractérisé en ce que** les zones de statut individuelles sont individualisées par une structure de différentes couleurs.

8. Procédé selon l'une des revendications précédentes, **caractérisé en ce que** les zones forment une hiérarchie les unes avec les autres, qui reflètent notamment la taille d'un résultat de mesure, plusieurs résultats de mesure et/ou les valeurs décrivant un statut d'un composant du système de mesure.

9. Procédé selon revendication 4 et selon notamment l'une des revendications 5 à 8, **caractérisé en ce que** dans une première colonne (50) d'un tableau de statut (48) des données d'état sont affichées, qui concernent le statut des ordinateurs de mesures individuels (28, 30, 32), sachant que chaque champ de la première colonne (50) du tableau de statut (48) est affecté à un ordinateur de mesure (28, 30, 32).

10. Procédé selon revendication 8 ou 9, **caractérisé en ce que** chaque ordinateur de mesure (28, 30, 32) est représenté dans son champ dans la première colonne (50) par son code - nom, adresse IP ou similaire -.

11. Procédé selon revendication 9 ou 10, **caractérisé en ce que** les données d'état, basées sur le statut de l'ordinateur de mesure correspondant (28, 30, 32), d'un champ de la première colonne (50) du tableau de statut (48) sont créées par le statut de la synchronisation temporelle de l'ordinateur de mesure (28, 30, 32), par l'accessibilité de l'ordinateur de mesure (28, 30, 32) par l'ordinateur de commande (40) et par des messages d'erreur du système de mesure compte tenu de cet ordinateur de mesure (28, 30, 32).

12. Procédé selon l'une des revendications 9 à 11, **caractérisé en ce que** dans la première ligne (52) du tableau de statut (48) les affectations individuelles correspondantes d'un ordinateur de mesure (28, 30, 32) à un ordinateur de commande (40) sont représentées, sachant que chaque champ de la première ligne (50) du tableau de statut (48) concerne l'affectation à un ordinateur de mesure (28, 30, 32).

13. Procédé selon l'une des revendications 9 à 12, **caractérisé en ce que** les deux champs suivants classés dans les lignes et les deux champs suivants du tableau de statut classés dans les colonnes affichent respectivement le statut des liaisons de mesure entre les ordinateurs de mesures individuels (28, 30, 32), pour lesquels sont agencés dans la première colonne (50) du haut vers le bas les ordinateurs de mesure (28, 30, 32) dans un ordre prédéfini et dans la première ligne (50) l'affectation des ordinateurs de mesure (28, 30, 32) dans le même ordre de gauche à droite dans leur affectation à un ordinateur de commande (40).

14. Procédé selon revendication 13, **caractérisé en ce que** l'un de ces champs du tableau de statut (48) affiche respectivement une liaison de mesure, ou plusieurs liaisons de mesure, d'un ordinateur de mesure (28, 30, 32) par rapport à un autre ordinateur de mesure (28, 30, 32) dans un sens, et le champ correspondant symétrique par rapport aux diagonales du tableau de statut (48), le sens opposé de la liaison de mesure ou des liaisons de mesure.

15. Procédé selon revendication 14, **caractérisé en ce que** le statut de la liaison de mesure est créé par l'affectation des résultats de mesure concernant la qualité d'une liaison de mesure dans les zones de statut, par la synchronisation temporelle des ordinateurs de mesure (28, 30, 32) et / ou par l'actualité des résultats de mesure.

16. Procédé selon revendication 6 et 13 et notamment selon revendication 14 ou 15, **caractérisé en ce que** les deux champs suivants du tableau de statut classés dans les lignes et les deux champs suivants classés dans les colonnes, présentent respectivement un deuxième niveau de représentation, dans lequel le statut de la liaison de mesure est représenté de manière plus détaillée.

17. Procédé selon revendication 16, **caractérisé en ce que** l'autre niveau de représentation affiche le type de liaison de mesure ainsi que le statut des paramètres de mesure individuels, déterminant la qualité de la liaison de mesure, de la liaison de mesure entre les ordinateurs de mesure (28, 30, 32) correspondants.

18. Procédé selon revendication 17, **caractérisé en ce que** le statut des paramètres de mesure est formé par les propriétés de transmission dans la liaison de mesure, comme durée de paquet, fluctuations de durée, pertes de paquet ou similaires.

19. Procédé selon l'une des revendications 15 à 18, **caractérisé en ce qu'**un troisième niveau de représentation est subordonné au deuxième niveau de représentation, dans lequel les résultats de mesure sont affichés en détail pendant une période déterminée.

20. Procédé selon l'une des revendications 9 à 19, **caractérisé en ce qu'**un deuxième niveau de représentation est subordonné aux champs de la première ligne (52) et / ou de la première colonne du tableau de statut (48) dans lequel des messages de système sont affichés.

21. Procédé selon l'une des revendications précédentes, **caractérisé en ce que** les données d'état sont affichées et actualisées par le biais d'un navigateur du dispositif de sortie (44).

22. Procédé selon l'une des revendications précédentes, **caractérisé en ce que** les données d'état sont automatiquement actualisées dans le tableau de statut (48) dans l'intervalle de temps prédéterminé.
